# FASCICULE DE BREVET EUROPEEN

(11) **EP 3 242 533 B1**
(45) Date de publication et mention de la délivrance du brevet: **15.07.2020**
(21) Numéro de dépôt: 17168542.3
(22) Date de dépôt: 27.04.2017
(51) Int. Cl.: H05B 45/50

(54) **DÉTECTION DE DÉFAILLANCE PARTIELLE ET/OU TOTALE D'UN GROUPE DE SOURCES LUMINEUSES D'UN VÉHICULE**
DETEKTION EINES TEILWEISEN ODER VÖLLIGEN AUSFALLS EINER GRUPPE VON LEUCHTQUELLEN EINES FAHRZEUGS
DETECTION OF PARTIAL AND/OR TOTAL FAILURE OF A GROUP OF LIGHT SOURCES OF A VEHICLE

(30) Priorité: 04.05.2016 FR 1654072
(43) Date de publication de la demande: 08.11.2017
(73) Titulaire: Valeo Iluminacion, 23600 Martos (ES)
(72) Inventeur: PENA, Miguel-Angel, 23600 MARTOS (ES); ILLAN, Antonio Domingo, 23600 MARTOS (ES); MARTINEZ-PEREZ, Jose-Ramon, 23600 MARTOS (ES); LARA-CABEZA, Juan, 23600 Martos (ES); SANTAELLA, Juan-Jose, 23600 Martos (ES); MARTINEZ-ZALDIVAR, Tomas, 23600 Martos (ES)
(74) Mandataire: Oggioni, Baptiste

(56) Documents cités:
- EP-A1- 1 753 267
- DE-A1-102009 019 752
- FR-A1- 2 962 703
- US-A1- 2005 179 393
- US-A1- 2016 018 457

## Description

L'invention a trait au domaine de l'alimentation électrique de sources lumineuses pour véhicules automobiles, en particulier de sources de type diodes électroluminescentes, LED. En particulier, l'invention concerne la détection de défaillance de telles sources lumineuses. Une diode électroluminescente, LED, est un composant électronique capable d'émettre de la lumière lorsqu'il est parcouru par un courant électrique. L'intensité lumineuse émise par une LED est en général dépendante de l'intensité du courant électrique qui la traverse. Entre autres, une LED est caractérisée par une valeur seuil d'intensité de courant. Ce courant direct (« forward current ») maximal est en général décroissant à température croissante. De même, lorsqu'une LED émet de la lumière, on observe à ses bornes une chute de tension égale à sa tension directe (« forward voltage »). Dans le domaine automobile, on a de plus en plus recours à la technologie LED pour diverses solutions de signalisation lumineuse. Les LEDs sont utilisées afin d'assurer des fonctions lumineuses telles que les feux diurnes, les feux de signalisation etc...

Il est connu dans l'art d'utiliser un circuit de pilotage pour piloter l'alimentation d'un ensemble ou groupe de LEDs. Le circuit définit la tension appliquée à une branche montée en charge et comprenant le groupe de LEDs branchées en série. Dans le domaine des dispositifs lumineux pour véhicules automobiles, il est particulièrement important de pouvoir assurer une luminosité constante afin de garantir la sécurité des utilisateurs du véhicule et des acteurs du trafic routier. Afin de fournir une alimentation constante, des circuits de pilotage connus utilisent différents types de convertisseurs, DC/DC, linéaire, résistif, etc, ... pour convertir la tension continue fournie par exemple par une batterie de voiture en une tension continue de charge, dépendante du nombre de LEDs alimentées. Il est économiquement intéressant d'utiliser des circuits de pilotage de conception simple, par exemple de type linéaire à faible puissance. L'utilisation de ce type de circuit de pilotage impose de partager l'ensemble des LEDs participant à la réalisation d'une même fonction lumineuse du véhicule automobile en plusieurs branches, chaque branche étant commandée et alimentée par un circuit de pilotage dédié. Il existe des circuits de pilotage de type linéaire qui comprennent des moyens de diagnostic. Les moyens de diagnostic fournissent un signal indicatif du fonctionnement de la branche de LEDs alimentée par le circuit de pilotage.

Le document DE 10 2009 019 752 A1 divulgue un dispositif lumineux pour véhicule automobile comportant deux groupes de sources lumineuses et pourvu d'un système de détection d'une défaillance partielle des sources lumineuses.

Le document EP 1753267 A1 divulgue un dispositif lumineux pour véhicule automobile comportant plusieurs groupes de sources lumineuses réalisant différentes fonctions lumineuses, dans lequel la détection d'une défaillance d'une fonction lumineuse ou de toutes les fonctions lumineuses du dispositif est réalisée.

Il existe toutefois un besoin, pour des raisons de sécurité de pouvoir détecter une défaillance totale de la fonction lumineuse en question (i.e., l'ensemble des LEDs qui réalisent la fonction est défaillant), et une défaillance partielle (i.e., un des groupes qui participent à la réalisation de la fonction est défaillant) de la fonction lumineuse.

L'invention a pour objectif de pallier à au moins un des problèmes posés par l'art antérieur. Plus précisément, l'invention a pour objectif de proposer un dispositif d'alimentation de sources lumineuses doté de moyens de diagnostic permettant la détection d'une défaillance partielle et/ou totale des sources lumineuses participant à la réalisation d'une même fonction lumineuse d'un véhicule automobile.

L'invention a pour objet un dispositif d'alimentation électrique de sources lumineuses participant à la réalisation d'une même fonction lumineuse pour un véhicule automobile. Le dispositif comprend une pluralité de moyens de pilotage de l'alimentation électrique d'au moins une source lumineuse chacun. Les moyens de pilotage comprennent chacun des moyens de diagnostic configurés pour fournir un signal de diagnostic de ladite source lumineuse. Le dispositif d'alimentation électrique est remarquable en ce qu'il comprend une unité de traitement des signaux de diagnostic fournis par la pluralité de moyens de pilotage. L'unité de traitement est configurée pour fournir, en fonction desdits signaux de diagnostic, un signal de détection d'une défaillance dite partielle des sources lumineuses alimentées par un des moyens de pilotage, et un signal de détection d'une défaillance dite totale des sources lumineuses alimentées par chacun des moyens de pilotage.

De manière préférée, les moyens de pilotage peuvent comprendre chacun un convertisseur linéaire d'alimentation.

De préférence, chaque moyen de pilotage peut comprendre une unique sortie de diagnostic pour fournir le signal de diagnostic.

L'unité de traitement peut de préférence comprendre un élément microcontrôleur relié aux moyens de diagnostic de chacun des moyens de pilotage.

De préférence, l'unité de traitement peut comprendre un circuit de combinaison logique ET pour fournir le signal de détection de défaillance totale sur base des signaux de diagnostic respectivement fournis par les moyens de diagnostic des moyens de pilotage. De préférence, une porte logique de type ET peut combiner les signaux de diagnostic fournis par chacun des moyens de pilotage en entrée de l'unité de traitement.

De préférence, l'unité de traitement peut comprendre un circuit de combinaison logique OU pour fournir le signal de détection de défaillance partielle sur base des signaux de diagnostic respectivement fournis par les moyens de diagnostic des moyens de pilotage. De préférence, une porte logique de type OU peut combiner les signaux de diagnostic fournis par chacun des moyens de pilotage en entrée de l'unité de traitement.

Les signaux de diagnostic fournis par les moyens de diagnostic et/ou par l'unité de traitement peuvent préférentiellement être des signaux binaires. Le signal de diagnostic peut de préférence être un signal binaire ayant un premier niveau lorsque la source lumineuse fonctionne correctement, et un deuxième niveau, différent du premier niveau, lorsqu'un fonctionnement défaillant est diagnostiqué.

Les moyens de pilotage peuvent de préférence comprendre un élément microcontrôleur.

L'invention a également pour objet un module lumineux pour un véhicule automobile, le module comprenant une pluralité de sources lumineuses réparties en une pluralité de groupes et un dispositif d'alimentation électrique des sources lumineuses. Le module est remarquable en ce que le dispositif d'alimentation électrique est conforme à l'invention, et en ce que chaque groupe de sources lumineuses est alimenté par le biais d'un des moyens de pilotage du dispositif d'alimentation électrique. De préférence, chaque croupe de sources peut avantageusement être alimenté par le biais d'un des moyens de pilotage, qui lui est exclusivement dédié.

De préférence, la pluralité de sources lumineuses peut participer à la réalisation d'une même fonction lumineuse du véhicule automobile.

Les sources lumineuses peuvent de préférence comprendre des sources lumineuses à élément semi-conducteur, en particulier des diodes électroluminescentes, LED, des diodes électroluminescentes organiques, OLED, ou des diodes Laser.

En utilisant les mesures proposées par la présente invention, il devient possible d'identifier des défaillances totales et/ou partielles parmi un ensemble de sources lumineuses qui participent à la réalisation d'une même fonction lumineuse d'un véhicule automobile, mais qui sont alimentées par une pluralité de moyens de pilotage de l'alimentation électrique. La solution proposée permet d'utiliser deux signaux binaires pour détecter et identifier les défaillances en question. Ceci engendre l'utilisation d'un câblage réduit par rapport à des solutions connues. Comme le dispositif ne requiert qu'un nombre limité de câbles pour réaliser les fonctions de diagnostic requises, la compatibilité électromagnétique du dispositif est accrue par rapport à des dispositifs connus, qui requièrent un nombre de connexions plus important, chaque connexion étant susceptible d'être affectée par des interférences électromagnétiques.

D'autres caractéristiques et avantages de la présente invention seront mieux compris à l'aide de la description exemplaire et des dessins parmi lesquels :
- la figure 1 est une représentation schématique d'un dispositif selon un mode de réalisation préféré de l'invention ;
- la figure 2 est une représentation schématique d'un dispositif selon un mode de réalisation préféré de l'invention ;
- la figure 3 est une représentation schématique d'un dispositif selon un mode de réalisation préféré de l'invention ;
- la figure 4 est une représentation schématique d'un dispositif selon un mode de réalisation préféré de l'invention.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre exemplaire et non limitatif. Des numéros de référence similaires seront utilisés pour décrire des concepts semblables à travers différents modes de réalisation de l'invention. Par exemple, les références, 100, 200, 300 et 400 désignent un dispositif selon l'invention, dans quatre modes de réalisation décrits.

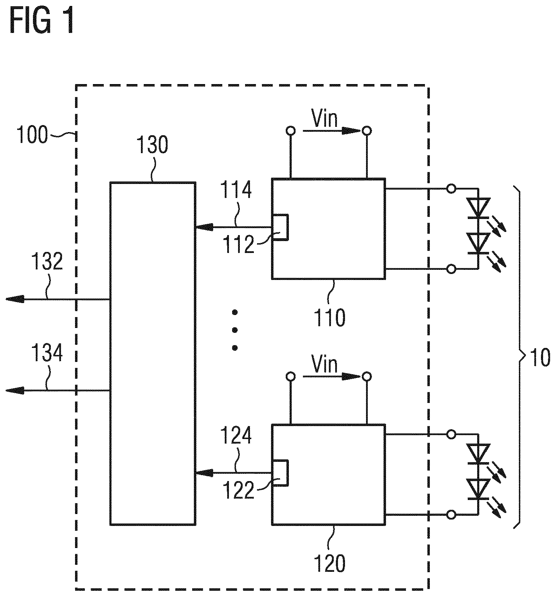

La figure 1 donne une illustration d'un mode de réalisation préférentiel de l'invention. Un dispositif d'alimentation électrique 100 comprend une pluralité de moyens de pilotage 110, 120 de l'alimentation d'au moins une source lumineuse chacun. Les sources lumineuses 10 participent à la réalisation d'une même fonction lumineuse d'un véhicule automobile. Tandis que la figure 1 montre deux moyens de pilotage, des pluralités plus importantes sont envisageables selon l'application visée et sans pour autant sortir du cadre de l'invention. De manière connue, les moyens de pilotage comprennent des circuits convertisseurs, de préférence de type linéaire, aptes à convertir une tension d'entrée fournie par exemple par une batterie du véhicule automobile, en une tension de charge adaptée à l'alimentation des sources lumineuses montées en charge des moyens de pilotage. Le dispositif 100 peut comprendre un circuit électronique ou un élément microcontrôleur implémentant la fonction de pilotage de l'alimentation des sources lumineuses 10. De tels circuits et/ou éléments microcontrôleurs sont en soi connus dans l'art et ne seront pas décrits en détails dans le cadre de la présente invention. A titre exemplaire et non limitatif, les sources lumineuses peuvent être des diodes électroluminescentes, LEDs.

Chacun des moyens de pilotage 110, 120 comprend des moyens de diagnostic 112, 122 configurés pour fournir un signal de diagnostic 114, 124 de la ou des sources lumineuses montées en charge des moyens de pilotage en question. Il s'agit de préférence d'un signal binaire ayant un premier niveau lorsque la source lumineuse fonctionne correctement, et un deuxième niveau, différent du premier niveau, lorsqu'un fonctionnement défaillant est diagnostiqué.

Le dispositif 100 comprend en outre une unité de traitement 130, qui combine les signaux de diagnostic 114, 124 fournis par chacun des moyens de pilotage en entrée de l'unité. L'unité de traitement 130 est configurée pour produire à sa sortie un signal de détection d'une défaillance dite partielle 132 lorsque des sources alimentées par un des moyens de pilotage ne fonctionnent pas correctement, et/ou un signal de détection d'une défaillance dite totale 134 lorsque l'intégralité des sources alimentées par les moyens de pilotage 110, 120 ne fonctionnent pas correctement. Chacun des signaux 132, 134 est de préférence un signal binaire ayant un premier niveau lorsqu'aucune défaillance n'est détectée, et présentant un deuxième niveau différent du premier niveau en cas de détection de défaillance partielle ou totale. Les signaux 132, 134 sont relayés vers un module de commande non-illustré du véhicule. Dans le cas de moyens de pilotage multiples, il est évident que la provision de l'unité de traitement 130 permet de réduire les connexions à des fins de diagnostic entre le dispositif 100 et le module de commande du véhicule automobile au nombre de deux.

L'unité de traitement 130 peut comprendre un élément microcontrôleur relié aux moyens diagnostics 112, 122 des différents moyens de pilotage 122. En combinaison ou en alternative, l'unité de traitement 130 peut également comprendre des circuits électroniques réalisant des fonctions logiques. Dans le cadre des modes de réalisations qui vont être décrits par la suite, l'utilité de portes logiques ET ainsi que OU pour combiner les signaux de diagnostic 114, 124 issus des différents moyens de pilotage 110, 120 sera mise en évidence.

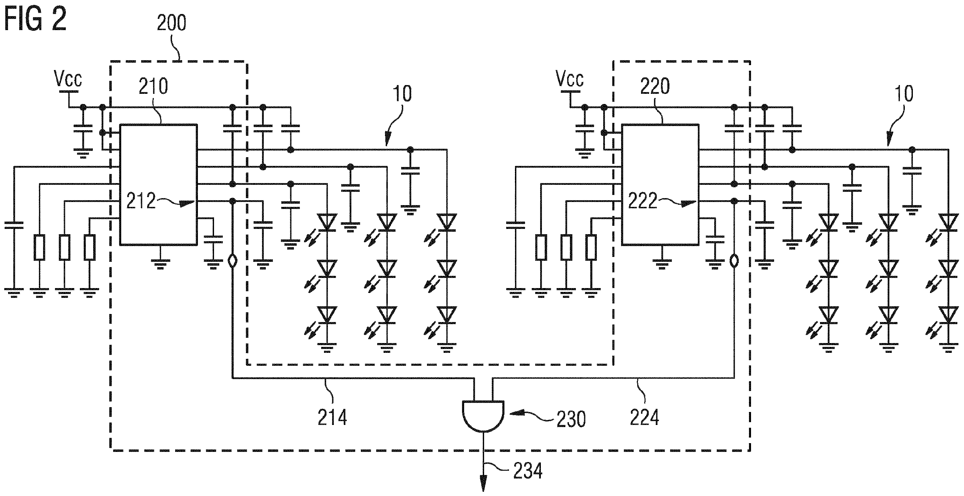

La figure 2 montre un mode de réalisation préféré de l'invention. Un dispositif d'alimentation électrique 200 comprend deux moyens de pilotage 210, 220 de l'alimentation d'au moins une source lumineuse chacun. Chacun des moyens de pilotage 210, 220 alimente plusieurs LEDs regroupés en série par branches. Les sources lumineuses 10 de type LED participent à la réalisation d'une même fonction lumineuse d'un véhicule automobile. Les moyens de pilotage comprennent chacun un élément microcontrôleur réalisant une fonction de diagnostic 212, 222. Une patte dédiée de l'élément microcontrôleur donne accès au signal de diagnostic 214, 224 relatif aux LEDs montées en charge des moyens de pilotage en question. Il s'agit de préférence d'un signal binaire ayant un premier niveau lorsque la source lumineuse fonctionne correctement, et un deuxième niveau, différent du premier niveau, lorsqu'un fonctionnement défaillant est diagnostiqué.

L'unité de traitement 230 comprend une porte logique de type ET qui combine les signaux de diagnostic 214, 224 fournis par chacun des moyens de pilotage en entrée de l'unité. Lorsque les deux signaux 214, 224 n'indiquent pas de défaillance et sont à un premier niveau représentant la valeur binaire 0, le signal de sortie 234 est également à un premier niveau représentant la valeur binaire 0. Lorsque seul un des signaux 214 ou 224 indique une défaillance tandis que l'autre des signaux 214 ou 224 n'indique pas de défaillance, c'est-à-dire un des signaux est à un premier niveau représentant la valeur binaire 0 tandis que le deuxième signal est à un deuxième niveau représentant la valeur binaire 1, le signal de sortie 234 reste au premier niveau représentant la valeur binaire 0. Si par contre les deux signaux 214 et 224 indiquent une défaillance des LEDs alimentées par les moyens de pilotage 210 et 220 respectivement, le signal de sortie 234 est à un deuxième niveau, différent du premier niveau, et représentant la valeur binaire 1. Le signal 234 généré par l'unité de traitement génère donc un signal indicatif d'une défaillance totale des LEDs 10.

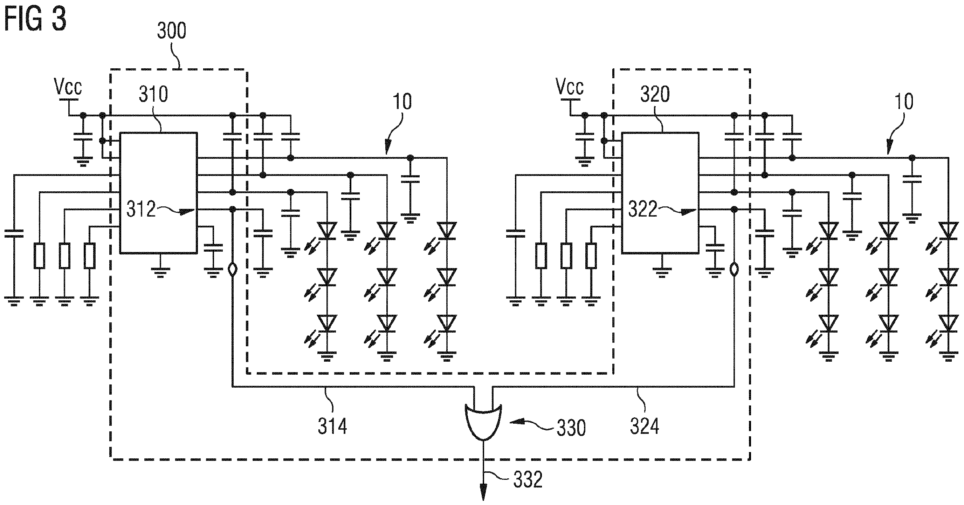

La figure 3 montre un autre mode de réalisation préféré de l'invention. Un dispositif d'alimentation électrique 300 comprend deux moyens de pilotage 310, 320 de l'alimentation d'au moins une source lumineuse chacun. Chacun des moyens de pilotage 310, 320 alimente plusieurs LEDs regroupés en série par branches. Les sources lumineuses 10 de type LED participent à la réalisation d'une même fonction lumineuse d'un véhicule automobile. Les moyens de pilotage comprennent chacun un élément microcontrôleur réalisant une fonction de diagnostic 312, 322. Une patte dédiée de l'élément microcontrôleur donne accès au signal de diagnostic 314, 324 relatif aux LEDs montées en charge des moyens de pilotage en question. Il s'agit de préférence d'un signal binaire ayant un premier niveau lorsque la source lumineuse fonctionne correctement, et un deuxième niveau, différent du premier niveau, lorsqu'un fonctionnement défaillant est diagnostiqué.

L'unité de traitement 330 comprend une porte logique de type OU qui combine les signaux de diagnostic 314, 324 fournis par chacun des moyens de pilotage en entrée de l'unité. Lorsque les deux signaux 314, 324 n'indiquent pas de défaillance et sont à un premier niveau représentant la valeur binaire 0, le signal de sortie 332 est également à un premier niveau représentant la valeur binaire 0. Lorsque seul un des signaux 314 ou 324 indique une défaillance tandis que l'autre des signaux 314 ou 324 n'indique pas de défaillance, c'est-à-dire un des signaux est à un premier niveau représentant la valeur binaire 0 tandis que le deuxième signal est à un deuxième niveau représentant la valeur binaire 1, le signal de sortie 332 est à un deuxième niveau, différent du premier niveau, et représentant la valeur binaire 1. Si les deux signaux 314 et 324 indiquent une défaillance des LEDs alimentées par les moyens de pilotage 310 et 320 respectivement, le signal de sortie 332 est également au deuxième niveau, différent du premier niveau, et représentant la valeur binaire 1. Le signal 332 généré par l'unité de traitement génère donc un signal indicatif d'une défaillance partielle des LEDs 10. Si au moins un des groupes de LEDs alimentés par un des moyens de pilotage 310 ou 320 est défaillant, le signal 332 indique ceci par le niveau binaire 1.

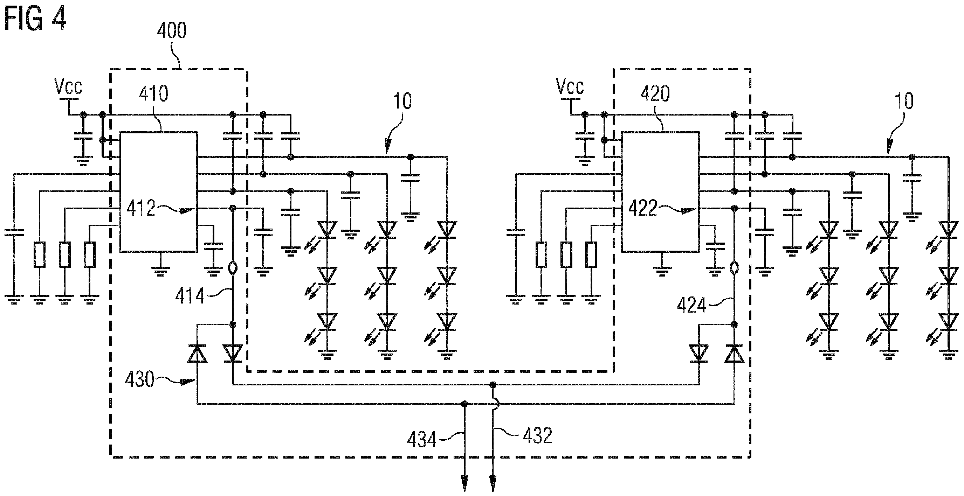

La figure 4 montre encore un autre mode de réalisation préféré de l'invention. Un dispositif d'alimentation électrique 400 comprend deux moyens de pilotage 410, 420 de l'alimentation d'au moins une source lumineuse chacun. Chacun des moyens de pilotage 410, 420 alimente plusieurs LEDs regroupés en série par branches. Les sources lumineuses 10 de type LED participent à la réalisation d'une même fonction lumineuse d'un véhicule automobile. Les moyens de pilotage comprennent chacun un élément microcontrôleur réalisant une fonction de diagnostic 412, 422. Une patte dédiée de l'élément microcontrôleur donne accès au signal de diagnostic 414, 424 relatif aux LEDs montées en charge des moyens de pilotage en question. Il s'agit de préférence d'un signal binaire ayant un premier niveau lorsque la source lumineuse fonctionne correctement, et un deuxième niveau, différent du premier niveau, lorsqu'un fonctionnement défaillant est diagnostiqué.

L'unité de traitement 430 comprend un circuit électronique réalisant une porte logique de type OU qui combine les signaux de diagnostic 414, 424 fournis par chacun des moyens de pilotage en entrée de l'unité en un signal de sortie 432, ainsi qu'un circuit électronique réalisant une porte logique de type ET qui combine les signaux de diagnostic 414, 424 fournis par chacun des moyens de pilotage en entrée de l'unité en un signal de sortie 434. Les circuits électroniques en question sont par exemple réalisés par des branchements de diodes, d'autres réalisations des fonctions ET/OU étant envisageables. Comme il vient d'être décrit pour les modes de réalisation précédents, le signal 432 est indicatif d'une défaillance partielle tandis que le signal 434 est indicatif d'une défaillance totale des LEDs 10. De manière alternative, l'unité de traitement 430 peut être mise en œuvre par un élément microcontrôleur programmé à cet effet.

L'homme du métier saura assurer le dimensionnement des différents composants électroniques impliqués dans l'implémentation des modes de réalisations décrits selon l'application concrète visée sans pour autant sortir du cadre de la présente invention.

## Revendications

1. Dispositif d'alimentation électrique (100, 200, 300, 400) de sources lumineuses (10) participant à la réalisation d'une même fonction lumineuse d'un véhicule automobile, le dispositif comprenant une pluralité de moyens de pilotage (110,120 ; 210,220 ; 310,320 ; 410,420) de l'alimentation électrique d'au moins une source lumineuse chacun, les moyens de pilotage comprenant chacun des moyens de diagnostic (112,122 ; 212,222; 312,322 ; 412,422) configurés pour fournir un signal de diagnostic (114,124 ; 214,224 ; 314,324 ; 414,424) de ladite source lumineuse, **caractérisé en ce que** le dispositif comprend une unité de traitement (130, 230, 330, 430) des signaux de diagnostic fournis par la pluralité de moyens de pilotage, l'unité de traitement étant configurée pour fournir, en fonction desdits signaux de diagnostic, un signal de détection d'une défaillance dite partielle (132, 332, 432) des sources lumineuses alimentées par un des moyens de pilotage, et un signal de détection d'une défaillance dite totale (134, 234, 434) des sources lumineuses alimentées par chacun des moyens de pilotage.

2. Dispositif selon la revendication 1, **caractérisé en ce que** chaque moyen de pilotage (110,120 ; 210,220 ; 310,320 ; 410,420) comprend une unique sortie de diagnostic pour fournir le signal de diagnostic.

3. Dispositif selon une des revendications 1 ou 2, **caractérisé en ce que** l'unité de traitement (130, 230, 330, 430) comprend un élément microcontrôleur relié aux moyens de diagnostic de chacun des moyens de pilotage.

4. Dispositif selon une des revendications 1 à 3, **caractérisé en ce que** l'unité de traitement (130, 230, 430) comprend un circuit de combinaison logique ET pour fournir le signal de détection de défaillance totale sur base des signaux de diagnostic respectivement fournis par les moyens de diagnostic des moyens de pilotage.

5. Dispositif selon une des revendications 1 à 4, **caractérisé en ce que** l'unité de traitement (130, 330, 430) comprend un circuit de combinaison logique OU pour fournir le signal de détection de défaillance partielle sur base des signaux de diagnostic respectivement fournis par les moyens de diagnostic des moyens de pilotage.

6. Dispositif selon une des revendications 1 à 5, **caractérisé en ce que** les signaux de diagnostic fournis par les moyens de diagnostic et/ou par l'unité de traitement sont des signaux binaires.

7. Dispositif selon une des revendications 1 à 6, **caractérisé en ce que** les moyens de pilotage comprennent un élément microcontrôleur.

8. Module lumineux pour un véhicule automobile comprenant une pluralité de sources lumineuses réparties en une pluralité de groupes et un dispositif d'alimentation électrique des sources lumineuses, **caractérisé en ce que** le dispositif d'alimentation électrique et conforme à une des revendications 1 à 7, et **en ce que** chaque groupe de sources lumineuses est alimenté par le biais d'un des moyens de pilotage du dispositif d'alimentation électrique.

9. Module lumineux selon la revendication 8, **caractérisé en ce que** les sources lumineuses comprennent des sources lumineuses à élément semi-conducteur, en particulier des diodes électroluminescentes, LED, des diodes électroluminescentes organiques, OLED, ou des diodes Laser.

## Patentansprüche

1. Vorrichtung (100, 200, 300, 400) zur Stromversorgung von Lichtquellen (10), die an der Ausführung derselben Lichtfunktion eines Kraftfahrzeugs beteiligt sind, wobei die Vorrichtung eine Vielzahl von Steuermitteln (110, 120; 210, 220; 310, 320) umfasst; 410, 420) zum Steuern der elektrischen Versorgung von jeweils mindestens einer Lichtquelle, wobei die Steuermittel jeweils Diagnosemittel (112, 122; 212, 222; 312, 322; 412, 422) umfassen, die so konfiguriert sind, dass sie ein Diagnosesignal (114, 124; 214, 224; 314, 324; 414, 424) für die Lichtquelle liefern,
**dadurch gekennzeichnet, dass** die Vorrichtung eine Verarbeitungseinheit (130, 230, 330, 430) zur Verarbeitung von Diagnosesignalen umfasst, die von der Vielzahl von Antriebsmitteln geliefert werden, wobei die Verarbeitungseinheit so konfiguriert ist, dass sie in Abhängigkeit von den Diagnosesignalen ein Signal zur Erfassung eines sogenannten Teilausfalls (132, 332, 432) der Lichtquellen, die von einem der Antriebsmittel geliefert werden, und ein Signal zur Erfassung eines sogenannten Totalausfalls (134, 234, 434) der Lichtquellen, die von jedem der Antriebsmittel geliefert werden, liefert.

2. Vorrichtung nach Anspruch 1, **dadurch gekennzeichnet, dass** jedes Antriebsmittel (110, 120; 210, 220; 310, 320; 410, 420) einen einzigen Diagnoseausgang zur Bereitstellung des Diagnosesignals umfasst.

3. Vorrichtung nach einem der Ansprüche 1 oder 2, **dadurch gekennzeichnet, dass** die Verarbeitungseinheit (130, 230, 330, 430) ein Mikrokontrollerelement umfasst, das mit den Diagnosemitteln jedes der Steuermittel verbunden ist.

4. Vorrichtung nach einem der Ansprüche 1 bis 3, **dadurch gekennzeichnet, dass** die Verarbeitungseinheit (130, 230, 430) eine logische UND-Verknüpfungsschaltung zur Bereitstellung des Gesamtfehler-Erkennungssignals auf der Grundlage der jeweils von den Diagnosemitteln der Antriebsmittel gelieferten Diagnosesignale umfasst.

5. Vorrichtung nach einem der Ansprüche 1 bis 4, **dadurch gekennzeichnet, daß** die Verarbeitungseinheit (130, 330, 430) eine logische ODER-Verknüpfungsschaltung zur Bereitstellung des Teilfehler-Erkennungssignals auf der Grundlage der jeweils von den Diagnosemitteln der Antriebsmittel gelieferten Diagnosesignale umfaßt.

6. Vorrichtung nach einem der Ansprüche 1 bis 5, **dadurch gekennzeichnet, dass** die von den Diagnosemitteln und/oder von der Verarbeitungseinheit gelieferten Diagnosesignale Binärsignale sind.

7. Vorrichtung nach einem der Ansprüche 1 bis 6, **dadurch gekennzeichnet, dass** die Treibermittel ein Mikrocontroller-Element umfassen.

8. Lichtmodul für ein Kraftfahrzeug mit einer Vielzahl von Lichtquellen, die in eine Vielzahl von Gruppen unterteilt sind, und einer Vorrichtung zur Stromversorgung der Lichtquellen, **dadurch gekennzeichnet, daß** die Stromversorgungsvorrichtung einem der Ansprüche 1 bis 7 entspricht und daß jede Gruppe von Lichtquellen über eines der Mittel zur Steuerung der Stromversorgungsvorrichtung versorgt wird.

9. Lichtmodul nach Anspruch 8, **dadurch gekennzeichnet, dass** die Lichtquellen Halbleiterelementlichtquellen, insbesondere Leuchtdioden, LEDs, organische Leuchtdioden, OLEDs oder Laserdioden umfassen.

## Claims

1. Device (100, 200, 300, 400) for supplying electricity to light sources (10) participating in the performance of the same light function of a motor vehicle, the device comprising a plurality of control means (110, 120; 210, 220; 310, 320); 410, 420) for controlling the electrical supply of at least one light source each, the control means each comprising diagnostic means (112, 122; 212, 222; 312, 322; 412, 422) configured to supply a diagnostic signal (114, 124; 214, 224; 314, 324; 414, 424) for said light source,
**characterized in that** the device comprises a processing unit (130, 230, 330, 430) for processing diagnostic signals supplied by the plurality of drive means, the processing unit being configured to supply, as a function of said diagnostic signals, a signal for detecting a so-called partial failure (132, 332, 432) of the light sources supplied by one of the drive means, and a signal for detecting a so-called total failure (134, 234, 434) of the light sources supplied by each of the drive means.

2. Device according to claim 1, **characterised in that** each driving means (110,120; 210,220; 310,320; 410,420) comprises a single diagnostic output for providing the diagnostic signal.

3. Device according to one of claims 1 or 2, **characterized in that** the processing unit (130, 230, 330, 430) comprises a microcontroller element connected to the diagnostic means of each of the control means.

4. Device according to one of claims 1 to 3, **characterized in that** the processing unit (130, 230, 430) comprises an AND logic combination circuit for providing the total failure detection signal on the basis of the diagnostic signals respectively provided by the diagnostic means of the driving means.

5. Device according to one of claims 1 to 4, **characterized in that** the processing unit (130, 330, 430) comprises a OR logic combination circuit for providing the partial failure detection signal on the basis of the diagnostic signals respectively provided by the diagnostic means of the driving means.

6. Device according to one of claims 1 to 5, **characterized in that** the diagnostic signals provided by the diagnostic means and/or by the processing unit are binary signals.

7. Device according to one of claims 1 to 6, **characterized in that** the driving means comprise a microcontroller element.

8. Light module for a motor vehicle comprising a plurality of light sources divided into a plurality of groups and a device for supplying power to the light sources, **characterised in that** the power supply device complies with one of claims 1 to 7, and **in that** each group of light sources is supplied via one of the means for controlling the power supply device.

9. Light module according to claim 8, **characterized in that** the light sources comprise semiconductor element light sources, in particular light-emitting diodes, LEDs, organic light-emitting diodes, OLEDs, or laser diodes.
